Europäisches Patentamt

European Patent Office

Office européen des brevets

(11) Publication number: **0 452 857 A1**

# EUROPEAN PATENT APPLICATION

(21) Application number: 91105985.5

(22) Date of filing: 15.04.91

(51) Int. Cl.⁵: **B65G 47/14**

(30) Priority: 16.04.90 US 516049

(43) Date of publication of application:
**23.10.91 Bulletin 91/43**

(84) Designated Contracting States:
**CH DE FR GB LI**

(71) Applicant: **AIDLIN AUTOMATION CORPORATION**
**P.O. Box 13125**
**Sarasota, Florida 34278-3125(US)**

(72) Inventor: **Aidlin, Stephen H.**
**1521 Eastbrook Drive**
**Sarasota, Florida 33581(US)**
Inventor: **Strassner, John B.**
**1360 Georgetown Circle**
**Sarasota, Florida 33582(US)**

(74) Representative: **Schmitz, Hans-Werner,**
**Dipl.-Ing. et al**
**Hoefer, Schmitz, Weber,**
**Ludwig-Ganghofer-Strasse 20**
**W-8022 Grünwald bei München(DE)**

(54) **Apparatus for aligning and feeding cylindrical articles.**

(57) Improved apparatus to align and convey a plurality of essentially cylindrical shaped articles (14), each having a radial enlargement adjacent to one end thereof comprising in combination a pair of conveyor belts (46,48) each arranged in closed loop configuration with inner and outer races (50,52), the inner races (50) of the belts (46,48) being in parallel alignment with a space therebetween to allow the passage of the articles (14) therethrough except for their enlargements so that movement of the belts (46,48) will align and convey the articles (14) with the articles (14) suspended from the belts (46,48) by their enlargements; drive means (58) to move the belts (46,48) with their inner races (50) moving in a common direction along a path of travel from an upstream input end to a downstream output end; and hopper (40) means spanning the input end of the belts (46,48) for receiving articles (14) to be aligned and conveyed, the hopper (40) having side faces angled downwardly to a space parallel with the path of travel and spaced a distance to allow the passage of articles (14) into the space between the conveyor belts (46,48) whereby movement of the conveyor belts (46,48) will reorient and align the articles (14) so that their enlargements are supported by the belts (46,48) with the remainder thereof depending from the belts.

EP 0 452 857 A1

Fig. I

## BACKGROUND OF THE INVENTION

### Field of the Invention

The present invention relates to apparatus for aligning and feeding cylindrical articles and, more particularly, to apparatus for aligning randomly oriented parisons and for feeding the aligned parisons by spaced belts from which the parisons are suspended by their neck rings.

### Description of the Background Art

In the prior art, various devices have been designed and manufactured for aligning randomly oriented articles and for feeding such aligned articles. By way of example note U.S. Patent Application Serial Number 07/382,292 filed July 20, 1989 and assigned to the assignee of the present invention. In accordance with that application, cylindrical articles such as parts of syringes are aligned by being suspended in the space between counter rotating rollers. In such application, it is the force of gravity which effects the movement of the parts from an orienting area to an area where the parts are positively fed.

The present invention is similar in that an elongated space is formed through which the fed articles are suspended. The present invention, however, positively feeds such aligned articles through space belts to increase the speed and efficiency of the apparatus.

In the above referred to prior application, the articles being fed are parts of a syringe. In the present invention, the fed articles are parisons. It should be understood, however, that such prior application, as well as the present application, are equally applicable to a wide variety of generally cylindrical articles with enlargements at one end which may be utilized for effecting alignment, suspension and feeding of the particular article.

The patent literature and a large number of commercial devices relate to aligning and feeding articles. Nothing however, utilizes conveyor belts with a space therebetween through which the articles are suspended and fed by an enlargement at one end as disclosed and claimed herein.

Therefore, it is the object of the invention to provide improved apparatus to align and convey a plurality of essentially cylindrical shaped articles, each having a radial enlargement adjacent to one end thereof comprising in combination a pair of conveyor belts each arranged in closed loop configuration with inner and outer races, the inner races of the belts being in parallel alignment with a space therebetween to allow the passage of the articles therethrough except for their enlargements so that movement of the belts will align and convey the articles with the articles suspended from the belts by their enlargements; drive means to move the belts with their inner races moving in a common direction along a path of travel from an upstream input end to a downstream output end; and hopper means spanning the input end of the belts for receiving articles to be aligned and conveyed, the hopper having side faces angled downwardly to a space parallel with the path of travel and spaced a distance to allow the passage of articles into the space between the conveyor belts whereby movement of the conveyor belts will reorient and align the articles so that their enlargement are supported by the belts with the remainder thereof depending from the belts.

It is the further object of the present invention to orient articles by conveyor belts with an aligned space therebetween for effecting both the alignment and the feeding of the cylindrical articles.

It is the further object of the present invention to utilize spaced conveyor belts for aligning randomly oriented flanged articles for being fed.

It is the further object of the invention to utilize the space between aligned conveyor belts to feed parisons supported by their neck rings.

Lastly, it is the object of the present invention to feed a machine at a constant rate by aligned conveyor belts extending from a hopper in which the articles to be fed are randomly deposited.

These objects and advantages should be construed as merely illustrative of some of the more prominent features and applications of the present invention. Many other beneficial results can be attained by applying the disclosed invention in a different manner or by modifying the invention within the scope of the disclosure. Accordingly, other objects and advantages as well as a fuller understanding of the invention may be had by referring to the summary and detailed description of the preferred embodiment of the invention in addition to the scope of the invention as defined by the claims taken in conjunction with the accompanying drawings.

## SUMMARY OF THE INVENTION

The present invention is defined by the appended claims. For the purpose of summarizing the invention, the invention may be incorporated into improved apparatus to align and convey a plurality of essentially cylindrical shaped articles, each having a radial enlargement adjacent to one end thereof comprising in combination a pair of conveyor belts each arranged in closed loop configuration with inner and outer races, the inner races of the belts being in parallel alignment with a space therebetween to allow the passage of the articles therethrough except for their enlargements so that movement of the belts will align and convey the articles with the articles suspended from the belts by their enlargements; drive means to move the belts with their inner races moving in a common direction along a path of travel from an upstream input end to a downstream output end; and hopper means spanning the input end of the belts for receiving articles to be aligned and conveyed, the hopper having side faces angled downwardly to a space parallel with the path of travel and spaced a distance to allow the passage of articles into the space between the conveyor belts whereby movement of the conveyor belts will reorient and align the articles so that their enlargements are supported by the belts with the remainder thereof depending from the belts.

The apparatus further includes kicker roller means adjacent to the downstream end of the hopper, the kicker roller means having an axis of rotation perpendicular to and above the belts to urge unaligned articles back into the hopper. The kicker roller means includes a first kicker roller located within the hopper to rotate in a direction whereby its lower extent will move unaligned articles back into the hopper and a second kicker roller downstream from the first kicker roller at a lower elevation whereby no improperly aligned articles can move to the output end of the conveyor. The belts extends for a substantial distance beyond the downstream end of the hopper for constituting a surge zone. The inner and outer races of the belt are arranged in a common, essentially horizontal plane. The apparatus includes support means for the conveyor belt on opposite sides of the path of travel with idler pulleys in contact with the outer races of the belts.

The present invention may also be incorporated into apparatus to align and feed a plurality of parisons, each having a neck ring adjacent to one end thereof, comprising in combination a pair of belts each arranged in closed loop configuration with inner and outer races, the inner races of the belts being in parallel alignment with a space therebetween to allow the passage of the parisons therethrough except for their neck rings whereby movement of the belts will align and feed the parisons suspended from the belts by the neck rings; drive means to move the belts with their inner races moving in a common direction along a path of travel from an input end to a output end; hopper means adjacent to the input end of the belts for receiving a quality of parisons to be aligned and fed, the hopper means angling downwardly to a location in operative proximity with the path of travel to allow the passage of parisons into the space between the belts whereby movement of the belts will reorient and align the articles so that their neck rings will be supported by the belts with the remainder thereof depending from the belts; and a surge zone formed by the belts and extending from the hopper in the path of travel.

The foregoing has outlined rather broadly the more pertinent and important features of the present invention in order that the detailed description of the invention that follows may be better understood whereby the present contribution to the art may be more fully appreciated. Additional features of the invention will be described hereinafter which form the subject of the claims of the present invention. It should be appreciated by those skilled in the art that the conception and the specific embodiment disclosed herein may be readily utilized as a basis for modifying or designing other structures for carrying out the same purposes of the present invention. It should also be realized by those skilled in the art that such equivalent structures do not depart from the spirit and scope of the present invention as set forth in the appended claims.

## BRIEF DESCRIPTION OF THE DRAWINGS

For a fuller understanding of the nature and objects of the invention, reference should be had to the following detailed description taken in conjunction with the accompanying drawings in which:

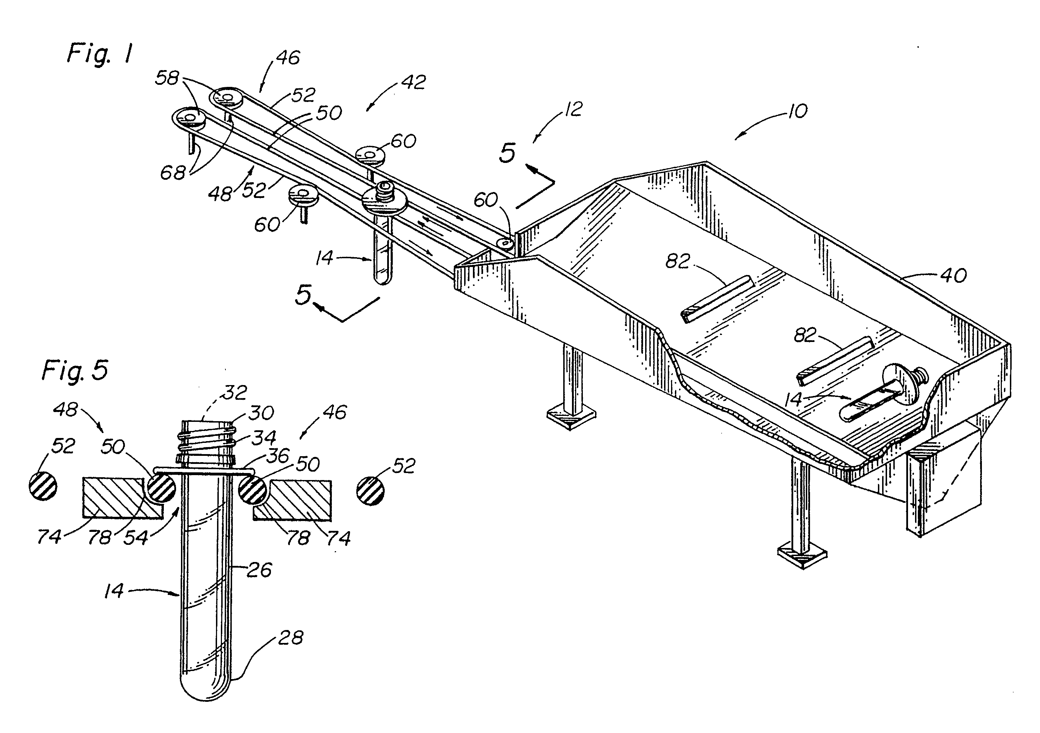

Figure 1 is a perspective illustration of the hopper portion and belts of the apparatus of the present invention with the input and output mechanisms removed and with parts broken away to show internal constructions thereof.

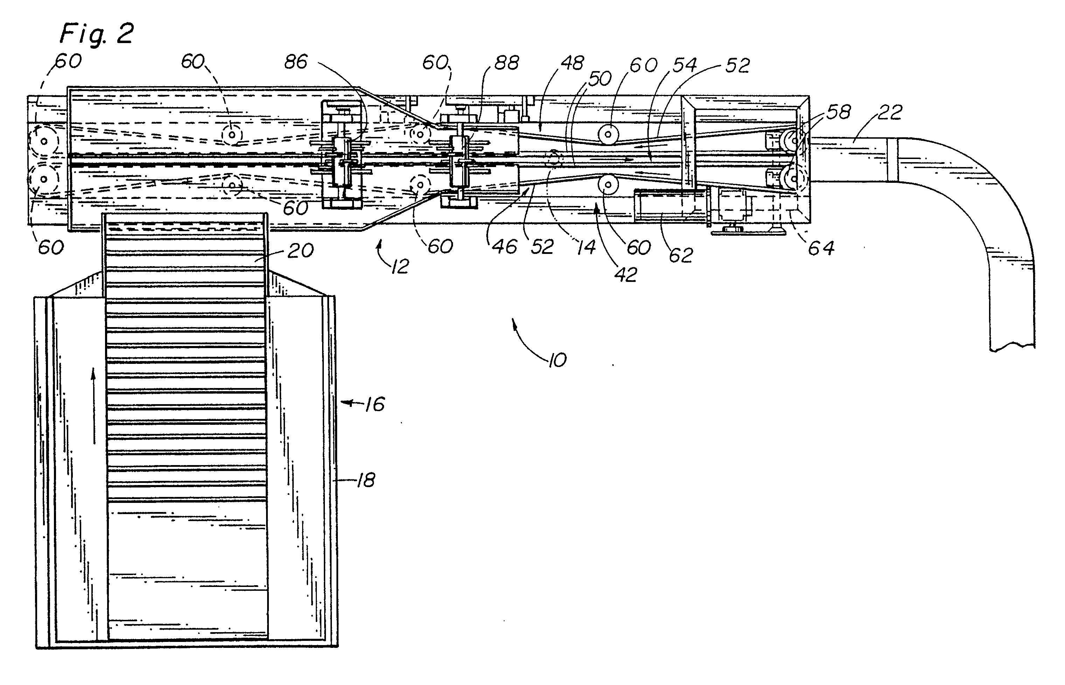

Figure 2 is a top elevational view of the feeding and aligning apparatus of Figure 1 but also showing the input and output mechanisms.

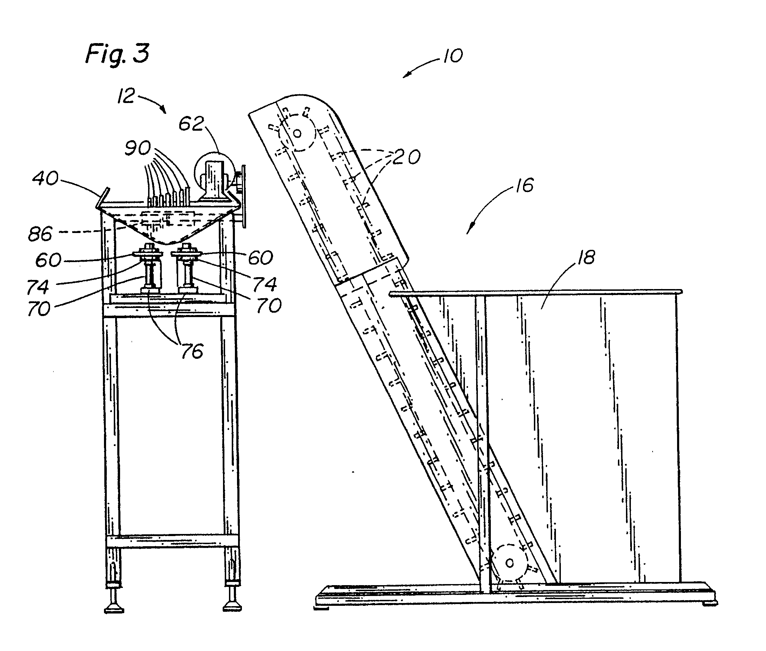

Figure 3 is an end elevational view of the apparatus shown in Figure 2 but with the output mechanisms removed.

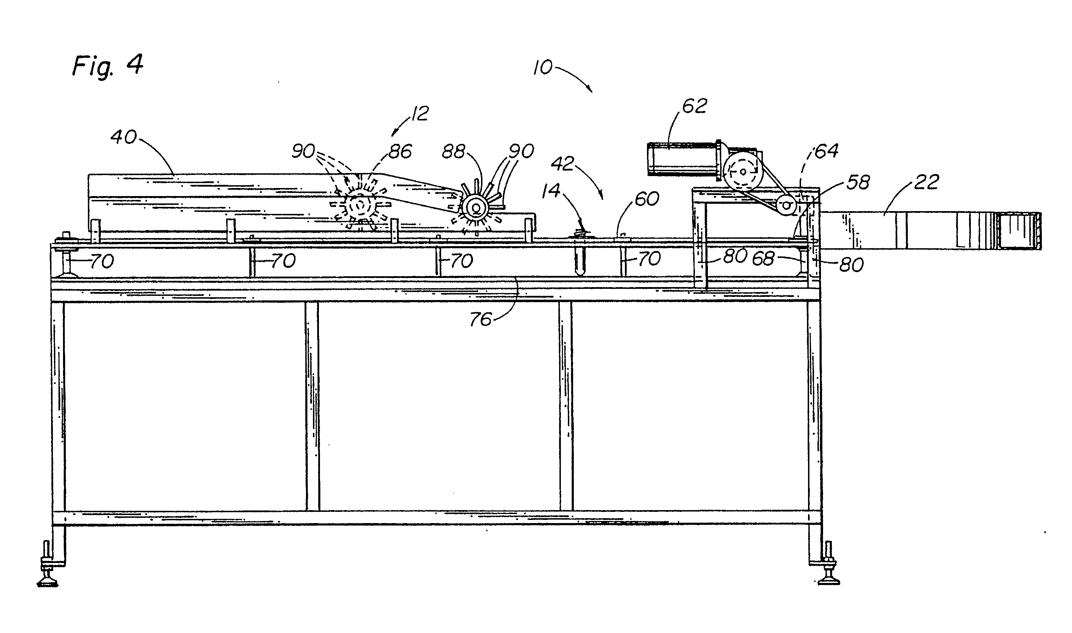

Figure 4 is a side elevational view of the apparatus shown in Figure 3 but with the input mechanisms removed.

Figure 5 is a sectional view of the conveyor belts of the apparatus shown in Figures 1 through 5 illustrating their support and feeding of a parison having been previously aligned.

Similar characteristics refer to similar parts throughout the several views of the drawings.

## DETAILED DESCRIPTION OF THE INVENTION

Shown in the figures is an aligning and feeding apparatus 10 in systems configuration constructed in accordance with the principle invention. The central part of the system is the apparatus 12 for effecting the aligning and feeding of the articles 14 being fed. An input device 16 includes a hopper 18 and an elevator 20. The output device 22 is an air conveyor.

In the primary embodiment, such articles are parisons. Parisons are injection molded parts made of a plastic such as PET, polyethylene terepthalate terpolymer. The parisons 14 are cylindrical for the majority of their extent in their central region 26. Their lower ends 28 are closed in a hemispherical shape. Their upper ends 30 are formed with openings 32 with external threads 34 and with an enlarged flange or neck ring 36 thereadjacent. It should be understood that any cylindrical or tubular article could be aligned and fed so long as such articles have a radially extending enlargement such as a flange adjacent to one end of the article which may be utilized in the orienting and feeding of articles in accordance with the principles of the present invention. The cylindrical articles need not be circular in cross section, as shown, since any cross sectional configuration could be aligned and fed by the present invention. In addition, the aligned and fed articles may be tapered along their lengths with their enlarged upper ends functioning as the supporting flange or neck ring.

In the preferred embodiment, the aligner/feeder apparatus 10 is set to feed at a rate of 400 units per minute. A blow-molding machine, not shown, and elevator 20 from a hopper 18 are shown as the preferred input device and are correlated to to infeed the aligner/feeder apparatus 10 at a correlated speed. At the output of the aligner/feeder apparatus 10 is an output device 22 which could be any type of mechanism for receiving the units from the aligner/feeder apparatus and for feeding such output to the blow-molding machine for converting the parisons into bottles. Such output feeding could be at any speed corralated to the speed of the aligner/feeder apparatus.

As a practical matter, the preferred output device is an air conveyor of the type commercially sold by the Aidlin Automation Machinery Corp. of Sarasota, Florida. Such a conveyor is described in U.S. Patent Number 4,822,214 issued April 18, 1989 and assigned to the assignee of the present invention. Such output device is adapted to feed the parisons at essentially any speed corralated to the input speed at which they are received and the operating speed of the blow molding machine. The conveyor unit could also be an index wheel of the type described in U.S. Patent Application identified hereinabove. And yet as a further embodiment, the output of the orientor/feeder apparatus of the present invention could feed directly into the input rails of a blow-molding machine.

Between the input and output devices is the aligner/feeder apparatus 12 of the present invention. The primary areas of the aligner/feeder apparatus are the reception hopper 40 at the input end and an elongated surge area 42 at the output end. The reception hopper 40 is adapted to receive a continuous flow of parisons 14 from the elevator 20. A pair of belts 46 and 48 extend the entire length of the apparatus 12. The belts 46 and 48 are each oriented in a separate closed loop configuration in a common, essentially horizontal, plane. Such an orientation generates an inner race 50 and an outer race 52 for each belt. An elongated space 54 separates the belts. The space is sufficiently wide to allow the cylindrical parison 14 to fall and be suspended therebetween. The space is sufficiently narrow as to receive the neck rings 36 of the parison 14 thereon without ever falling through the slot. As can be seen in Figure 5, a perfectly aligned parison would lie with the edges of its neck ring on upper interior edges of the inner races of the belts with the majority of its length depending therefrom.

The belts 46 and 48 are preferably formed with a circular cross sectional configuration, as shown. Other cross sectional configurations could readily be utilized. The belts are non-elastic or slightly elastic depending upon their application. They may be fabricated of an elastomer, preferably polyurethane. Other acceptable materials include nylon, delran, or the like. They also may be cable of steel or other inextensible material coated with one of these elastomers or a functional equivalent thereof.

Belts 46 and 48 are driven from one end, preferably the output end, by a pair of drive pulleys 58 at the output ends of the belts. A plurality of spaced idler pulleys 60 are located along the lengths of the belts and at the input ends. The drive pulleys 58 are powered, preferably from a common motor 62, through appropriate gears 64, to rotate at equal speeds but in opposite directions. In this manner, the inner races 50 of the belts will orient and align the parisons 14 with vertical axes and will positively feed them at a proper speed.

The belts 46 and 48 and pulleys 58 and 60 are notatably supported through shafts 68 and 70 by appropriate upper supports 74 and lower supports 76. The belts are slidably received and supported in arcuate recesses 78 of the upper supports 74 which are fabricated of elastameric material. The elastameric material preferably ultra-high molecular weight polyethylene, a lubricious material, to minimize frictional losses. Other applicable materials include nylon, delran, etc. or even stainless steel with the lubriciousness deriving from the belt. The upper supports are coupled with the lower supports 76 through vertical bars 80 and are movable independently toward and away from each other. This allows for adjustment of the belts toward and away from each other to accommodate parisons of different sizes as well as common size parisons with different size neck rings. The upper and lower supports are then received upon a framework to maintain the apparatus at a convenient height.

In the preferred embodiment, the belts are each formed with a diameter of about 0.375 inches. Their centers are spaced about 1.775 inches apart. The space between the belts is thus about 1.400 inches. The arcuate or curved regions of the upper support blocks secures the belt spacings and insures no excess separation. Such an arrangement is appropriate for common parisons having a diameter of about 1.125 inches with neck rings of about 1.625 inches. As can be seen, note Figure 5, the neck rings cannot fall between the belts but allows for the majority of each of the parisons to fall betweeen the belts.

In operation and use, the elevator delivers the parisons into the hopper at the input end of the conveyor at a controlled rate essentially equal to the rate of the blow molding machine and the output conveyor device. Due to the downwardly angled faces and forwardly angled guidebars 82, the parisons will gravity fall to the belts. Movement of the belts will agitate the random mass of parisons to the extent whereby the elongated end of the parison will fall between the space between the moving belts being suspended and fed by their neck rings.

Located along the path of movement of the parisons are a pair of kicker rollers 86 and 88. The kicker rollers are positively driven members with resilient projections 90 in a helical configuration. The rollers 86 and 88 are rotatable about an axis above, and perpendicular, to the direction of movement of the parison. The first kicker roller 86 is located at an elevation such as to give a preliminary return motion to parisons not supported by the away from the direction of motion. This abates jamming. A second kicker roller 88 slightly downstream from the first roller is located slightly closer to the parison at a location to totally preclude any unaligned parisons from moving therepassed.

The surge area 42 is employed to allow the belts to move at a higher rate of speed, as for example 450 units per minute, than the nominal rate of speed of the system. As a result, the parisons in the surge area may slow down or stop as occurs if there is a jam in the output device. The belts simply continue to drive, slipping with regard to the stopped parisons. Conversely, there might be times when a jam occurs in the hopper area or along the surge area. An operator can quickly correct the situation. Since the belts are moving faster than the nominal rate, any space created between parisons will quickly be closed up so the blow-molding machines will not know that there had been a problem.

In association with the system, an electric eye is utilized to detect when there are an excess of parisons in the hopper. In such situations, the electric eye would detect the back-up as might be caused by the non-feeding through the surge area. When detected, the electric eye would be coupled to turn off the elevators. The belt, however, would continue under all conditions until the situation is corrected. Such an electric eye is the same as that disclosed in the above-mentioned U.S. Patent Application. The subject matter of such application is incorporated by experience herein.

The present disclosure includes that contained in the appended claims, as well as that of the foregoing description. Although this invention has been described in its preferred form with a certain degree of particularity it is understood that the present disclosure of the preferred form has been made only by way of example with numerous changes in the details of construction and the combination and arrangement of parts made and resorted to without departing from the spirit of the invention.

## Claims

1. Apparatus to align and convey a plurality of essentially cylindrical shaped articles, each having a radial enlargement adjacent to one end thereof comprising in combination:

   a pair of conveyor belts each arranged in closed loop configuration with inner and outer races, the inner races of the belts being in parallel alignment with a space therebetween to allow the passage of the articles therethrough except for their enlargements so that movement of the belts will align and convey the articles with the articles suspended from the belts by their enlargements;

   drive means to move the belts with their inner races moving in a common direction along a path of travel from an input upstream end to a downstream output end; and

   hopper means spanning the input end of the belts for receiving an essentially continuous flow of articles to be aligned and conveyed, the hopper having side faces angled downwardly to a space parallel with the path of travel and spaced a distance to allow the passage of articles into the space between the conveyor belts whereby movement of the conveyor belts will reorient and align the articles so that their enlargements are supported by the belts with the remainder thereof depending from the belts.

2. The apparatus as set forth in Claim 1 and further including kicker roller means adjacent to the downstream end of the hopper, the kicker roller means having an axis of rotation perpendicular to and above the belts to urge unaligned articles back into the hopper.

3. The apparatus as set forth in Claim 2 where the kicker roller means includes a first kicker roller located within the hopper to rotate in a direction whereby its lower extent will move unaligned articles back into the hopper and a second kicker roller downstream from the first kicker roller at a lower elevation whereby no improperly aligned articles can move to the output end of the conveyor.

4. The apparatus as set forth in Claim 1 wherein the belts extends for a substantial distance beyond the downstream end of the hopper for constituting a surge zone.

5. The apparatus as set forth in Claim 1 wherein the inner and outer races of the belt are arranged in a common, essentially horizontal plane.

6. The apparatus as set forth in Claim 5 and further including support means for the conveyor belt on opposite sides of the path of travel with idler pulleys in contact with the outer races of the belts.

7. Apparatus to align and feed a plurality of parisons, each having a neck ring adjacent to one end thereof comprising in combination:

a pair of belts each arranged in closed loop configuration with inner and outer races, the inner races of the belts being in parallel alignment with a space therebetween to allow the passage of the parisons therethrough except for their neck rings whereby movement of the belts will align and feed the parisons suspended from the belts by the neck rings;

drive means to move the belts with their inner races moving in a common direction along a path of travel from an input end to a output end;

hopper means adjacent to the input end of the belts for receiving a quality of parisons to be aligned and fed, the hopper means angling downwardly to a location in operative proximity with the path of travel to allow the passage of parisons into the space between the belts whereby movement of the belts will reorient and align the articles so that their neck rings will be supported by the belts with the remainder thereof depending from the belts; and

a surge zone formed by the belts and extending from the hopper in the path of travel.

Fig. 1

Fig. 5

Fig. 2

EP 0 452 857 A1

Fig. 3

Fig. 4

European Patent Office

EUROPEAN SEARCH REPORT

Application Number

## DOCUMENTS CONSIDERED TO BE RELEVANT

EP 91105985.5

| Category | Citation of document with indication, where appropriate, of relevant passages | Relevant to claim | CLASSIFICATION OF THE APPLICATION (Int. Cl.5) |
|---|---|---|---|
| A | US - A - 2 911 088 (INGHAM) * Totality * -- | 1,7 | B 65 G 47/14 |
| A | US - A - 2 781 885 (TAYLOR) * Fig. 2-4 * ---·- | 1,7 | |

TECHNICAL FIELDS SEARCHED (Int. Cl.5)

B 65 G

The present search report has been drawn up for all claims

| Place of search | Date of completion of the search | Examiner |
|---|---|---|
| VIENNA | 03-06-1991 | PISSENBERGER |